# EUROPÄISCHE PATENTANMELDUNG

(11) **EP 0 686 665 A2**
(43) Veröffentlichungstag der Anmeldung: **13.12.1995**
(21) Anmeldenummer: 95108200.7
(22) Anmeldetag: 30.05.1995
(51) Int. Cl.: C08K 5/3492, C08L 61/32, C08G 12/42, C08J 5/18, B32B 27/42, D06M 15/423

(54) **Melaminharz-Mischungen**

(30) Priorität: 08.06.1994 DE 4420013
(71) Anmelder: BASF Aktiengesellschaft, D-67063 Ludwigshafen (DE)
(72) Erfinder: Wittmann, Otto, D-67227 Frankenthal (DE); Decher, Jakob, D-67240 Bobenheim-Roxheim (DE); Kirchgässner, Uwe, Dr., D-67227 Frankenthal (DE); Kummer, Matthias, Dr., D-67273 Weisenheim (DE); Jäckh, Christof, Dr., D-69120 Heidelberg (DE)

(57) **Zusammenfassung**

Melaminharz-Mischungen, enthaltend
A) 75 bis 98 Gew.-% eines veretherte Methylolgruppen tragenden Melaminharzes (Komponente A) aus Melamin und Formaldehyd im Molverhältnis 1 zu 2 bis 6, bei dem
   A1) 50 bis 99,5 mol-% der Methylolgruppen mit Methanol und/ oder Ethanol verethert sind und
   A2) 0,5 bis 50 mol-% der Methylolgruppen mit einem mehrwertigen aliphatischen C₂- bis C₁₀-Alkohol (Alkohol A2) verethert sind
   und
B) 2 bis 25 Gew.-% Melamin (Komponente B).

Sie können als Binde-, Imprägnier-, Beschichtungs- oder Textilausrüstungsmittel sowie zur Herstellung von Melaminharz-Folien verwendet werden.

## Beschreibung

Die vorliegende Erfindung betrifft Melaminharz-Mischungen, enthaltend
A) 75 bis 98 Gew.-% eines veretherte Methylolgruppen tragenden Melaminharzes (Komponente A) aus Melamin und Formaldehyd im Molverhältnis 1 zu 2 bis 6, wobei
   A1) 50 bis 99,5 mol-% der Methylolgruppen mit Methanol und/ oder Ethanol verethert sind und
   A2) 0,5 bis 50 mol-% der Methylolgruppen mit einem mehrwertigen aliphatischen C₂- bis C₁₀-Alkohol (Alkohol A2) verethert sind
   und
B) 2 bis 25 Gew.-% Melamin (Komponente B)

sowie Verfahren zu deren Herstellung und deren Verwendung als Binde-, Imprägnier-, Beschichtungs- oder Textilausrüstungsmittel.

Veretherte Methylolgruppen tragende Melaminharze sind allgemein bekannt und werden beispielsweise als Beschichtungsmittel, bei der Textilausrüstung und als Bindemittel bei der Herstellung von Verbundwerkstoffen eingesetzt.

Es ist z. B. aus der DE-B 20 05 166 bekannt, veretherte Methylolgruppen tragende Melaminharze als "Griff" gebende Mittel bei der Ausrüstung von Synthesefasern zu verwenden.

Das japanische Patent Kokai 56-44764 betrifft Mischungen von Melamin mit Methylolgruppen tragenden Melaminharzen, die nur mit monofunktionellen C₁- bis C₄-Alkoholen verethert sind. Diese Harze dienen als Anstrichmittel und zeichnen sich durch eine geringe Neigung zur Abgabe von Formaldehyd aus.

Veretherte Methylolgruppen tragende Melaminharze werden daneben hauptsächlich zur Herstellung von Verbundwerkstoffen wie Melaminharz-Folien eingesetzt. Hierzu werden z.B. Papiere, Gewebe oder Vliese mit dem Melaminharz imprägniert und bei Temperaturen von 100 bis 180°C ausgehärtet.

Diese Melaminharz-Folien werden vor allem zur Oberflächenvergütung von Holzwerkstoffen wie Span-, Hartfaser- und Tischlerplatten eingesetzt. Die Melaminharz-Folien werden hierzu mit einem geeigneten Klebstoff, gegebenenfalls unter Anwendung von Hitze und Druck, auf die Flächen und Kanten der Holzwerkstoffe geklebt.

In der DE-A 23 09 334 wird beispielsweise empfohlen, für die Herstellung von Melaminharz-Folien Harze, die den Dimethylether des Dimethylolmelamins oder den Di- oder Trimethylether des Trimethylolmelamins enthalten, zu verwenden.

Aus der DE-A 38 14 292 sind mit einwertigen und mehrwertigen Alkoholen veretherte Methylolgruppen tragende Melaminharze bekannt, die erhalten werden, indem man ein nur begrenzt wasserlösliches, mit Methanol oder Ethanol veretherte Methylolgruppen tragendes Melaminharz mit einem wasserlöslichen 2- oder 3wertigen Alkohol bei 50 bis 100°C und saurem pH umsetzt, bis eine unbegrenzt wassermischbare Reaktionsmischung entstanden ist.

An die Verarbeitbarkeit der Melaminharze und die Gebrauchseigenschaften der mit diesen Harzen hergestellten Folien bzw. der mit ihnen beschichteten Materialien, z.B. Holzwerkstoffe, werden vielfältige Anforderungen gestellt.

Die Melaminharze sollen eine geringe Viskosität und gleichzeitig einen möglichst hohen Feststoffgehalt aufweisen, damit sie nach dem Auftragen rasch und vollständig in das zu imprägnierende Material eindiffundieren und bei der Verarbeitung möglichst wenig Lösungsmittel verbraucht wird.

Durch die Beschichtung mit Melaminharz-Folien soll die Widerstandfähigkeit der Holzwerkstoffe gegenüber mechanischen Beanspruchungen und ihre Wasserfestigkeit verbessert werden. Wichtig hierfür sind eine hohe Abrieb- und Spaltfestigkeit, Fexibilität, Elastizität und geringe Neigung zur Wasseraufnahme der Melaminharz-Folien. Die Flexibilität und Elastizität ist insbesondere dort von Bedeutung, wo mit den Folien gekrümmte Flächen, z.B. abgerundete Kanten von Spanplatten, s.g. Softkanten, beschichtet werden sollen.

Die bekannten Melaminharz-Folien sind, was diese Eigenschaften betrifft, zwar noch verbesserungsfähig, haben jedoch für die meisten Awendungen ein ausreichendes Eigenschaftsniveau. Für die Lösung einiger spezieller Beschichtungsprobleme ist das Eigenschaftsniveau dieser Melaminharz-Folien jedoch noch nicht vollauf befriedigend. Insbesondere werden von den Möbelherstellern für die Beschichtung von Softkanten Melaminharz-Folien gewünscht, die gegenüber den bekannten eine verbesserte Elastizität bei gleichzeitig verbesserter oder mindestens gleich guter Wasserfestigkeit aufweisen.

Aufgabe der vorliegenden Erfindung war es deshalb, Melaminharze bereitzustellen, die die Mängel des Standes der Technik nicht aufweisen und mit denen sich insbesondere Melaminharz-Folien herstellen lassen, die sich für die Beschichtung von Softkanten eignen.

Demgemäß wurden die eingangs definierten Melaminharz-Mischungen gefunden.

Sie enthalten 75 bis 98, bevorzugt 80 bis 90 Gew.-% eines veretherte Methylolgruppen tragenden Melaminharzes (Komponente A) und 2 bis 25, bevorzugt 10 bis 20 Gew.-% Melamin (Komponente B), wobei die Gewichts-Prozentangaben jeweils auf die Mischung aus den Komponenten (A) und (B) bezogen sind.

Die Komponente (A) ist ein veretherte Methylolgruppen tragendes Melaminharz aus 2 bis 6, bevorzugt 3 bis 4,5 mol Formaldehyd pro Mol Melamin, wobei
A1) 50 bis 99,5, bevorzugt 70 bis 90 und besonders bevorzugt 80 bis 90 mol-% der Methylolgruppen mit Methanol und/oder Ethanol verethert sind und
A2) 0,5 bis 50, bevorzugt 10 bis 30 und besonders bevorzugt 10 bis 20 mol-% der Methylolgruppen mit einem mehrwertigen aliphatischen C₂- bis C₁₀-Alkohol (Alkohol A2) verethert sind.

Der Anteil der unveretherten Methylolgruppen beträgt günstigerweise 0 bis 40, bevorzugt 0 bis 20 und besonders bevorzugt 0 bis 10 mol-%, bezogen auf die Gesamtmenge an veretherten und unveretherten Methylolgruppen.

Als aliphatische mehrwertige C₂- bis C₁₀-Alkohole (A2) kommen insbesondere 2- oder 3wertige Alkohole in Betracht, insbesondere Mono- oder Poly-(C₂- oder C₃-alkylen)glycole, z.B. Diethyengylcol, Triethylenglycol, Dipropylenglycol sowie Glycerin und Trimethylolpropan.

Als Komponente (A) sind vor allem relativ niedermolekulare veretherte Methylolgruppen tragende Melaminharze geeignet, die im statistischen Mittel nur 1 bis 3 vom Melamin abgeleitete Struktureinheiten enthalten. Höhere Oligomere, die 3 bis 10 vom Melamin abgeleitete Struktureinheiten enthalten, sind weniger geeignet, da sie wegen ihrer höheren Viskosität in Abmischung mit der Komponente (B) Melaminharz-Mischungen ergeben, die relativ schwer verarbeitbar sind oder in hoher Verdünnung eingesetzt werden müssen.

Geeignete veretherte Methylolgruppen tragende Melaminharze (A) sind z.B. aus der DE-A 38 14 292 bekannt:

Sie sind beispielsweise erhältlich, indem man
a1) Methylolgruppen tragende Melaminharz-Vorprodukte (Komponente a1) aus Melamin und 2 bis 6, bevorzugt 3 bis 4,5 mol Formaldehyd pro Mol Melamin, bei denen bis zu 90 mol-% der Methylolgruppen mit Methanol und/oder Ethanol verethert sein können, mit
a2) einem Alkoholgemisch, enthaltend
   a2.1) 50 bis 99, bevorzugt 80 bis 95 mol-% Methanol und/oder Ethanol und
   a2.2) 1 bis 50, bevorzugt 5 bis 20 mol-% aliphatische mehrwertiger C₂- bis C₁₀-Alkohole (Alkohole A2)

umsetzt, d.h. um- bzw. verethert.

Die Methylolgruppen tragenden Melaminharz-Vorprodukte (a1) sind allgemein bekannt und beispielsweise in Ullmanns Encyclopädie der technischen Chemie, 4. Auflage, Band 7, S. 408 bis 409 beschrieben. Sie sind erhältlich, indem man Formaldehyd und Melamin in alkalisch wässerigem Milieu kondensiert und für den Fall, daß ein Teil der Methylolgruppen mit Methanol und/oder Ethanol verethert sein soll, das Kondensationsprodukt in saurem Milieu mit Methanol und/oder Ethanol verethert.

Als Komponente (a1) kommen insbesondere unveretherte Verbindungen in Betracht sowie solche, bei denen ein Teil, bevorzugt 50 bis 90 mol-% der Methylolgruppen mit Methanol und/oder Ethanol verethert sind.

Eine besonders niedrige Viskosität bei hohem Feststoffgehalt der erfindungsgemäßen Melaminharz-Mischungen läßt sich erreichen, wenn ein Gemisch von Methylolgruppen tragenden Melaminharz-Vorprodukten (a1) eingesetzt wird, das zu mehr als 50 Gew.-%, bevorzugt zu mehr als 80 Gew.-%, solche Methylolgruppen tragenden Melaminharz-Vorprodukte enthält (a1), die nur eine von Melamin abgeleitete Einheit enthalten, und Methylolgruppen tragende Melaminharz-Vorprodukte (a1) mit 3 oder mehr von Melamin abgeleitete Einheiten, die durch Kondensation der Methylolgruppen der Melaminharz-Vorprodukte entstehen, zu weniger als 5 Gew.-% im Gemisch vorliegen.

Die zur Herstellung der veretherte Methylolgruppen tragenden Melaminharze (A) erforderlichen Molmengen der Komponente (a1) und des Alkoholgemisches (a2) werden so gewählt, daß die Molmenge der Hydroxylgruppen des Alkoholgemisches (a2) größer ist als die Molmenge der Methylolgruppen der Komponente (a1). Bevorzugt kommen auf 1 mol Methylolgruppen 2 bis 10, besonders bevorzugt 4 bis 6 mol Alkoholgruppen des Alkoholgemisches (a2).

Durch den Überschuß der Hydroxylgruppen des Alkoholgemisches (a2) wird die Bildung von an sich unerwünschten höhermolekularen oder vernetzten Reaktionsprodukten, die durch Kondensation von mehreren Molekülen eines Methylolgruppen tragenden Melaminharz-Vorproduktes mit einem Molekül eines mehrwertigen Alkohols gebildet werden, weitgehend vermieden.

Bei der Um- bzw. Veretherung können organische Lösungsmittel mitverwendet werden. Wässerige Lösungsmittel sind weniger geeignet, da sie bei der Veretherungsreaktion das Gleichgewicht auf die Seite der Ausgangsprodukte verschieben. Die Veretherung in wässerigem Milieu kommt meistens in Betracht, falls auf die Vollständigkeit des Umsatzes kein Wert gelegt wird.

Werden wässerige Lösungen Methylolgruppen tragender Melaminharz-Vorprodukte (a1), bei denen die Methylolgruppen unverethert sind, eingesetzt, wie sie beispielsweise bei der Methylolierung von Melamin mit wässeriger 40 %-iger Formaldehydlösung erhalten werden, so wird die Veretherung bevorzugt in 2 Stufen durchgeführt.

In der ersten Stufe wird die wässerigen Lösung der Methylolgruppen tragenden Melaminharz-Vorprodukte (a1), bei denen die Methylolgruppen unverethert sind, bevorzugt-mit einem 5 bis 10 fachen molaren Überschuß an Methanol und/oder Ethanol, bezogen auf die Wassermenge, zu Methylolgruppen tragenden Melaminharz-Vorprodukten, bei denen ein Teil der Methylolgruppen mit Methanol und/oder Ethanol verethert ist, umgesetzt und anschließend der überwiegende Teil der Wassermenge als Alkohol-Wasser-Gemisch abdestilliert. Um das Gleichgewicht auf die Seite der höher veretherten Produkte zu verschieben, wird das Verfahren gegebenenfalls wiederholt. Die so erhaltenen Methylolgruppen tragenden Melaminharz-Vorprodukte (a1) werden danach in einer zweiten Stufe mit dem Alkoholgemisch (a2) zu den veretherte Methylolgruppen tragenden Melaminharzen (A) um- bzw. verethert.

Eine weitere Möglichkeit zur Herstellung der Mischungskomponente (A) ist die Umetherung bzw. weitere Veretherung eines Methylolgruppen tragenden Melaminharz-Vorproduktes (a3) aus Melamin und 2 bis 6 mol Formaldehyd pro Mol Melamin, bei dem mehr als 50 % der Methylolgruppen mit Methanol und/oder Ethanol verethert sind, mit einem aliphatischen mehrwertigen C₂- bis C₁₀-Alkohol (a4).

Bei den bevorzugten veretherte Methylolgruppen tragenden Melaminharz-Vorprodukten (a3) sind im Mittel mehr als 50, besonders bevorzugt 80 bis 100 mol-% mit Methyl- und/oder Ethylgruppen verethert. Sehr bewährt haben sich veretherte Methylolverbindungen mit 4,5 bis 6 mit Methanol und/oder Ethanol veretherten Methylolgruppen, bezogen auf eine in der veretherten Methylolverbindung enthaltene Melamineinheit, und vor allem Hexakismethoxymethylmelamin.

Die veretherten Methylolgruppen tragenden Melaminharz-Vorprodukte (a3) sind handelsüblich und ihre Herstellung ist aus der DE-A 37 00 244 bekannt.

Zur Herstellung derartiger Komponenten (a3) eignen sich die genannten Methylolgruppen tragenden Melaminharz-Vorprodukte (a1), insbesondere solche mit 4,5 bis 6 unveretherten Methylolgruppen, bezogen auf eine in dem Melaminharz-Vorprodukt (a1) enthaltene Melamineinheit.

Die Um- bzw. Veretherung der Komponenten (a3) zu den veretherte Methylolgruppen tragenden Melaminharzen (A) erfolgt mit einem mehrwertigen aliphatischen C₂- bis C₁₀-Alkohol (a4).

Als mehrwertige Alkohole (a4) kommen dieselben Verbindungen in Betracht wie die definitionsgemäßen mehrwertigen Alkohole (A2). Die Menge an mehrwertigem Alkohol (a4) für die Um- bzw. Veretherung der Komponente (a3) beträgt 0,3 bis 1,5 und vorteilhafterweise 0,5 bis 1,2 mol pro mol Melamin in der Komponente (a3).

Die Um- bzw. Veretherung eines Methylolgruppen tragenden Melaminharz-Vorproduktes (a1) mit dem Alkoholgemisch (a2) zur Komponente (A) als auch die Ver- bzw. Umetherung eines Methylolgruppen tragenden Melaminharz Vorproduktes (a3) mit einem mehrwertigen Alkohol (a4) zu einer Komponente (A) wird bei einer Temperatur von 50 bis 100, bevorzugt bei 70 bis 95°C bei einem sauren pH-Wert, bevorzugt bei einem pH-Wert von 3,0 bis 6,5, besonders bevorzugt von 3,5 bis 5 vorgenommen, wobei die Reaktionszeiten im allgemeinen von 15 bis 120 min, bevorzugt von 20 bis 40 betragen.

Zur Einstellung des gewünschten pH-Wertes wird die Mischung der Ausgangsverbindungen mit einer anorganischen Säure wie Salz-, Schwefel-, oder Phosphorsäure oder einer organischen Säure, insbesondere Carbonsäure, z.B. einer Dicarbonsäure wie Maleinsäure, Valeriansäure oder Oxalsäure versetzt.

Die Um- bzw. Veretherung kann gegebenenfalls auch in Gegenwart eines inerten organischen Lösungsmittels wie einem aromatischen oder araliphatischen C₆- bis C₁₅-Kohlenwasserstoff durchgeführt werden.

Der Zeitpunkt, wann bei der Um- bzw. Veretherung der gewünschte Umsatz erreicht ist, kann beispielsweise durch Messung der hierbei gebildeten Menge an Reaktionswasser ermittelt werden.

Nach Beendigung der Um- bzw. Veretherung werden die veretherte Methylolgruppen tragenden Melaminharze (A) im allgemeinen mit einer anorganischen Base wie Alkalilauge neutralisiert und durch Filtration von unlöslichen Feststoffen befreit.

Gegebenenfalls werden organische Lösungsmittel, Wasser, Methanol, Ethanol sowie sonstige leichtflüchtige Bestandteile abdestilliert, falls der Feststoffgehalt erhöht werden soll oder falls bei der Weiterverarbeitung diese Lösungsmittel nicht gewünscht werden. Im allgemeinen werden die eventuell vorhandenen nicht umgesetzten Anteile der relativ hochsiedenden mehrwertigen aliphatischen C₂- bis C₁₀-Alkohole nicht entfernt.

Praktischerweise wird die erfindungsgemäße Melaminharz-Mischung hergestellt, indem man zunächst das veretherte Methylolgruppen tragende Melaminharz (A) herstellt und es mit der entsprechenden Menge an Melamin vermischt. Die Vermischung erfolgt bevorzugt bei Temperaturen von 20 bis 90, bevorzugt bei 60 bis 80°C, wobei die Vermischung mit Hilfe üblicher Methoden wie Verrühren erfolgt.

Das Melamin kann in sowohl in fester als auch Form einer Lösung in einem organischen Lösungsmittel zugesetzt werden.

Die erfindungsgemäßen Melaminharz-Mischungen sind bereits in Substanz handelsfähig. Bevorzugt werden jedoch konzentrierte Lösungen verarbeitet, die einen Feststoffgehalt von 60 bis 85, bevorzugt von 65 bis 75 Gew.-% und damit eine für die Weiterverarbeitung günstige Viskosität von 350 bis 500 mPa s aufweisen sowie relativ hochverdünnte Lösungen mit einem Feststoffgehalt von 30 bis 50 Gew.-%.

Diese und auch die im folgenden Text zum Feststoffgehalt und zur Viskosität gemachten Angaben beziehen sich auf folgende Meßmethoden:

Zur Messung des Feststoffgehaltes werden 1 g der Substanz in einem Wägeglas nach DIN 12 605 mit einem Durchmesser von 35 mm bei einer Temperatur von 120 °C 1 h getrocknet.

Die Angaben zu den Viskositäten beziehen sich auf Messungen nach DIN 53 018. Die Viskosität wird hiernach an einer auf einen Feststoffgehalt von 70 Gew.-% eingestellten Lösung des Harzes in einem Rotationsviskosimeter bei 20°C gemessen.

Als Lösungsmittel kommen neben Wasser, Ethanol und Methanol ein- oder mehrwertige C₂- bis C₁₀-Alkohole, darunter insbesondere die als Alkohole (A2) aufgeführten mehrwertigen aliphatischen C₂- bis C₁₀-Alkohole und aliphatische C₃- bis C₁₀-Alkohole wie Isopropanol, sonstige inerte Lösungsmittel wie aliphatische C₃- bis C₁₀-Ketone, z.B. Aceton und Butanon sowie aromatische oder araliphatische Kohlenwasserstoffe in Betracht. Wässerige und nichtwässerige Gemische dieser Lösungsmittel sind selbstverständlich ebenfalls geeignet, vor allem Mischungen von Wasser und Isopropanol im Verhältnis 0,1 : 1 bis 9 : 1. Üblicherweise enthalten die Lösungen der Melaminharz-Mischungen relativ hochsiedende Lösungsmittel mit einem Siedepunkt oberhalb von 180°C bei Normaldruck wie die mehrwertigen aliphatischen C₂- bis C₁₀-Alkohole nur in Mengen von 8 bis 30 Gew.-%, bezogen auf den Feststoffgehalt der Lösung.

Die erfindungsgemäße Melaminharz-Mischung eignet sich zur Ausrüstung von Textilien, als Beschichtungsmittel, z.B. als Farbe oder Lack sowie insbesondere als Binde- oder Impräniermittel zur Herstellung von Verbundwerkstoffen auf Basis von Papier, Textilien oder Vliesen.

Von besonderer Bedeutung in der Praxis sind die Melaminharz-Mischungen für die Herstellung von Verbundwerkstoffe auf Basis von Papier, die als Melaminharz-Folien Verwendung finden können.

Zur Herstellung der Melaminharz-Folien geht man üblicherweise so vor, daß man Tränkpapiere mit der Melaminharz-Mischung imprägniert, und das Harz bei erhöhter Temperatur aushärtet.

Vor der Verarbeitung können den Melaminharz-Mischungen übliche Hilfs- und Modifizierungsmittel zugesetzt werden.

Zur Beschleunigung der Härtungsreaktion wird den Melaminharz-Mischungen günstigerweise ein Härtungsmittel bekannter Art wie Säuren, z.B. p-Toluolsulfonsäure oder deren in der Hitze spaltbare Ammoniak- oder Aminsalze in Mengen von 0,5 bis 5 Gew.-%, bezogen auf den Feststoffgehalt der Melaminharz-Mischungen zugesetzt.

Üblicherweise werden die Tränkpapiere imprägniert, indem man sie durch Tauchen oder Bestreichen mit der Melaminharz-Mischung benetzt, wobei auf 100 Gewichtsteile Papier 25 bis 70 Gewichtsteile Melaminharz-Mischung, bezogen auf den Feststoffgehalt, kommen.

Die Härtung der imprägnierten Papiere zu Melaminharz-Folien erfolgt anschließend in s.g. Schwebetrocknern bei 100 bis 180°C, bevorzugt bei 140 bis 160°C.

Die Weiterverarbeitung der Melaminharz-Folien erfolgt wie üblich, z.B. indem man sie mit einem handelsüblichen Foliendecklack lakkiert und gegebenenfalls unter Anwendung von Hitze und Druck auf das zu beschichtende Holz- oder Holzwerkstoffteil klebt.

Aufgrund ihrer hohen Elastizität bei gleichzeitig guter Spalt- und Wasserfestigkeit eignen sich die mit den erfindungsgemäßen Melaminharz-Mischungen hergestellten Melaminharz-Folien zur Beschichtung von gewölbten Flächen an Holz- oder Holzwerkstoffteilen wie Softkanten. Die beschichteten Holz- bzw. Holzwerkstoffteile können zu Möbeln verarbeitet werden, die auch hohen Beanspruchungen, wie sie typischerweise in Küchen auftreten, standhalten.

### Beipiele

### Beispiel 1 (erfindungsgemäß)

Eine Mischung aus 456 ml einer 40 gew.-%igen Formalinlösung (entspricht 6,1 mol Formaldehyd) und 150 g Melamin (1,2 mol), die mit 50 gew.-%iger Natronlauge auf einen pH-Wert von 8,2 eingestellt worden war, wurde so lange auf 70°C erhitzt, bis sie klar wurde. Anschließend wurden die Mischung mit 683 g (21,4 mol) Methanol vermischt, auf 60°C abgekühlt und mit Salpetersäure auf einen pH-Wert von 4,9 eingestellt. Nach 15 min. wurde ein pH-Wert von 8,1 eingestellt und die Mischung durch Destillation auf auf ca. 60 % des Volumens eingeengt. In einer zweiten Veretherungsstufe wurde die Mischung mit 455 g (14,3 mol) Methanol und 66 g (0,44 mol) Triethylenglycol versetzt, mit Salpetersäure auf einen pH-Wert von 4,4 eingestellt und 30 min auf 50°C erhitzt. Danach wurde der pH-Wert auf 8,1 eingestellt und in der Mischung wurden 30 g (0,2 mol) Melamin gelöst. Anschließend wurde die Melaminharz-Mischung durch Destillation auf einen Feststoffgehalt von 85 Gew.-% eingeengt und mit destilliertem Wasser auf einen Feststoffgehalt von 72 Gew.-% und anschließend mit Isopropanol auf einen Feststoffgehalt von 45 Gew.-% verdünnt.

### Beispiel 2 (zum Vergleich)

Die Melaminharz-Mischung wurde, wie beim erfindungsgemäßen Beispiel beschrieben, hergestellt, jedoch wurden 180 g (1,4 mol) Melamin von Beginn an eingesetzt und es wurde nach der Veretherung kein Melamin zugesetzt.

### Beispiel 3 (zum Vergleich)

Die Melaminharz-Mischung wurde, wie beim erfindungsgemäßen Beispiel beschrieben, hergestellt, jedoch wurde bei der zweiten Veretherungsstufe kein Triethylenglycol eingesetzt.

### Herstellung der Folien

100 g eines Tränkpapiers mit einem Flächengewicht von 260 g/m² wurden mit 30 g des jeweiligen Harzes, dem unmittelbar vorher 0,1 Gew.-%, bezogen auf den Feststoffgehalt, p-Toluolsulfonsäure zugesetzt worden waren, gleichmäßig imprägniert und bei 160 °C zu einer Melaminharz-Folie getrocknet.

Die Prüfergebnisse bezüglich der anwendungstechnischen Eigenschaften der Folien finden sich in der folgenden Tabelle.

### Ermittlung der Wasserfestigkeit:

Eine Melaminharz-Folie wird für 10 min in Wasser bei 20 °C gelagert und anschließend oberflächlich mit einem Tuch abgetrocknet. Die Gewichtszunahme bei der Wasserlagerung wird ermittelt und ist als Wasseraufnahme in Gew.-% angegeben.

### Ermittlung der Spaltfestigkeit:

Nach dem Zerreißen einer Melaminharz-Folie wird die Rißkante visuell beurteilt. Die Beurteilung erfolgt anhand einer Notenskala von 1 bis 6, wobei 1 für eine völlig spaltfreie scharfe Rißkante und 6 für eine breite Rißfläche mit starker Papierspaltung steht.

### Ermittlung der Elastizität:

Ein 25 cm langer Bogen der Melaminharz-Folie wird in 2 cm breite Folienstreifen geschnitten, wobei die Schnittrichtung und Papierfertigungsrichtung parallel verlaufen.

Ein Folienstreifen wird an einem Ende fixiert und das freie Ende wird durch einen 3 mm breiten Spalt geschoben. Das freie Ende wird umgeschlagen und in entgegengesetzter Richtung durch den Spalt geschobenen, so daß der Folienstreifen eine Schleife bildet. Zieht man an dem freien Ende des Folienstreifens, so verkleinert sich der Radius der durch den Folienstreifen gebildeten Schleife, bis der Folienstreifen schließlich bricht. Die Länge des Folienstreifenabschnittes, der von der Bruchkante bis zum Spalt reicht, wird gemessen. Je kürzer dieser Abschnitt ist, desto elastischer ist die Folie.

| | Bsp. 1 (erfindungsgem.) | Bsp. 2 (zum Vergl.) | Bsp. 3 (zum Vergl.) |
|---|---|---|---|
| Wasseraufnahme [%] | 30 | 50 | 40 |
| Spaltfestigkeit | 2 bis 3 | 5 | 4 bis 5 |
| Elastizität [mm] | 56 | 60 | 80 |

## Patentansprüche

1. Melaminharz-Mischungen, enthaltend
A) 75 bis 98 Gew.-% eines veretherte Methylolgruppen tragenden Melaminharzes (Komponente A) aus Melamin und Formaldehyd im Molverhältnis 1 zu 2 bis 6, bei dem
A1) 50 bis 99,5 mol-% der Methylolgruppen mit Methanol und/oder Ethanol verethert sind und
A2) 0,5 bis 50 mol-% der Methylolgruppen mit einem mehrwertigen aliphatischen C₂- bis C₁₀-Alkohol (Alkohol A2) verethert sind
und
B) 2 bis 25 Gew.-% Melamin (Komponente B).

2. Melaminharz-Mischungen nach Anspruch 1, wobei der Alkohol (A2) ein Mono- oder Poly-(C₂- oder C₃-alkylen)glycol ist.

3. Melaminharz-Mischungen nach Anspruch 1 oder 2, enthaltend als Komponente (A) ein veretherte Methylolgruppen tragendes Melaminharz, erhältlich
I) durch Umsetzung
a1) eines Methylolgruppen tragenden Melaminharz-Vorpro duktes aus 2 bis 6 mol Formaldehyd pro Mol Melamin, bei dem bis zu 90 mol-% der Methylolgruppen mit Methanol und/oder Ethanol verethert sind (Komponente a1), mit
a2) einem Alkoholgemisch, enthaltend
a2.1) 50 bis 99 mol-% Methanol und/oder Ethanol und
a2.2) 1 bis 50 mol-% eines mehrwertigen aliphatischen C₂- bis C₁₀-Alkohols (Alkohol A2) bei 50 bis 100°C und saurem pH, wobei das Alkoholgemisch (a2) in solchen Mengen eingesetzt wird, daß die Molmenge der Hydroxylgruppen des Alkoholgemisches (a₂) größer ist als die der Komponente (a1)
oder
II) durch Umsetzung
a3) eines Methylolgruppen tragenden Melaminharz-Vorproduktes aus Melamin und 2 bis 6 mol Formaldehyd pro Mol Melamin, bei der mehr als 5 mol-% der Methylolgruppen mit Methanol und/oder Ethanol verethert sind (Komponente a3), mit
a4) 0,3 bis 1,5 mol eines aliphatischen mehrwertigen C₂-bis C₁₀-Alkohols (Alkohol A2) pro Mol Melamin in der Komponente (a3)
bei 50 bis 100°C und saurem pH.

4. Verfahren zur Herstellung von Melaminharz-Mischungen gemäß den Ansprüchen 1 bis 3, dadurch gekennzeichnet, daß man zunächst die Komponente (A) herstellt und sie mit dem Melamin (Komponente B) bei einer Temperatur von 20 bis 90°C vermischt.

5. Verwendung der Melaminharz-Mischungen gemäß den Ansprüchen 1 bis 3, bzw. hergestellt nach Anspruch 4 als Binde-, Imprägnier-, Beschichtungs- oder Textilausrüstungsmittel

6. Verwendung der Melaminharz-Mischungen gemäß den Ansprüchen 1 bis 3, bzw. hergestellt nach Anspruch 4 zur Herstellung von Melaminharz-Folien.

7. Mit den Melaminharz-Mischungen gemäß den Ansprüchen 1 bis 4 hergestellte Melaminharz-Folien.
